# EUROPÄISCHE PATENTSCHRIFT

(11) **EP 0 719 666 B1**
(45) Veröffentlichungstag und Bekanntmachung des Hinweises auf die Patenterteilung: **15.07.1998**
(21) Anmeldenummer: 95120651.5
(22) Anmeldetag: 28.12.1995
(51) Int. Cl.: B60J 7/00

(54) **Verkleidungsdeckel für Kraftfahrzeug-Schiebedächer**
Lining panel for automobile sliding roofs
Panneau de revêtement pour des toits coulissants de véhicules automobiles

(30) Priorität: 30.12.1994 DE 4447014
(43) Veröffentlichungstag der Anmeldung: 03.07.1996
(73) Patentinhaber: Rockwell International GmbH, 60314 Frankfurt (DE)
(72) Erfinder: Stallfort, Klaus, D-63477 Maintal (DE); Hattass, Rainer, D-63548 Gründau (DE); Federmann, Dieter, D-63450 Hanau (DE)
(74) Vertreter: Oppermann, Ewald, Dipl.-Ing.

(56) Entgegenhaltungen:
- DE-A- 3 930 054
- GB-A- 2 235 233
- US-A- 4 606 574

## Beschreibung

Die Erfindung bezieht sich auf einen Verkleidungsdeckel für Kraftfahrzeug-Schiebedächer entsprechend dem Oberbegriff des Anspruchs 1. Ein derartiger Verkleidungsdeckel für Kraftfahrzeug-Schiebedächer ist aus DE-A-4 328 674 bekannt. Unter dem hier verwendeten Sammelbegriff "Schiebedächer" sollen einfache Schiebedächer und Schiebehebedächer verstanden werden, deren der Dachöffnung zugeordneter Deckel, hier als "Schiebedeckel" bezeichnet, als Blech- oder Glasdeckel ausgebildet sein kann.

Mit DE-A-4 328 674 wurde ein Verkleidungsdeckel vorgeschlagen, der nicht nur vor direkter Sonneneinstrahlung bei gleichzeitig guter Luftdurchgängigkeit schützt, sondern auch von einfacher und leichter Konstruktion ist und dennoch eine hohe Biegesteifigkeit aufweist, um im Fahrbetrieb bei geöffnetem Schiebedach auftretenden Auftriebskräften widerstehen zu können. Zur Erzielung dieser Eigenschaften ist der Verkleidungsdeckel nach DE-A-4 328 674 durch einen seine Außenform und -abmessungen bestimmenden steifen Verkleidungsrahmen, der mit einem flexiblen, luftdurchlässigen Flächenmaterial bespannt ist, gekennzeichnet.

Der Verkleidungsdeckel nach DE-A-4 328 674 erfüllt alle bezüglich des Sonnenschutzes, der Luftdurchlässigkeit, des geringen Gewichts, der einfachen Konstruktion und der Biegesteifigkeit gestellten funktionalen Anforderungen, jedoch können seine vom Fahrzeuginnenraum her sichtbaren Elemente und Flächen wegen der Kontrastwirkung zu dem festen Fahrzeughimmel als störend empfunden werden. Zwar ist schon in DE-A-4 328 674 vorgeschlagen worden die Unterseite des flexiblen, luftdurchlässigen Flächenmaterials in Struktur und/oder Farbgebung der Fahrzeuginnenausstattung anzupassen, jedoch hebt sich der Verkleidungsdeckel dennoch wegen der die Luftdurchlässigkeit ermöglichenden besonderen Struktur des Bespannungs-Flächenmaterials und des vom Fahrzeuginnenraum her sichtbaren Verkleidungsrahmens bei geschlossenem Verkleidungsdeckel von dem übrigen Fahrzeughimmel deutlich ab.

Der Erfindung liegt daher die Aufgabe zugrunde, einen Verkleidungsdeckel der vorstehend angegebenen Ausbildung bereitzustellen, der unter Beibehaltung aller funktionalen Eigenschaften des Verkleidungsdeckels nach DE-A-4 328 674 dem festen Dachhimmel so anpaßbar ist, daß er in seiner Schließstellung nicht mehr störend in Erscheinung tritt.

Die gestellte Aufgabe wird durch die Merkmale des Anspruchs 1 gelöst. Vorteilhafte Weiterbildungen der Erfindung sind in den Unteransprüchen angegeben und werden nachstehend ebenfalls näher erläutert.

Der erfindungsgemäß ausgebildete Verkleidungsdeckel besteht im wesentlichen aus dem bespannten Verkleidungsrahmen und einer zusätzlichen Verkleidungsplatte, die unterhalb des bespannten Verkleidungsrahmens vorgesehen und im wesentlichen als geschlossenes Flächengebilde gestaltet ist. Dabei sind der bespannte Verkleidungsrahmen und die Verkleidungsplatte relativ verschiebbar Zueinander angeordnet. Die Verkleidungsplatte kann in der Schließstellung den bespannten Verkleidungsrahmen vollständig abdecken, so daß dieser vom Fahrzeuginnenraum her nicht sichtbar ist. Da die Verkleidungsplatte an ihrer unteren Fläche entsprechend der Sichtfläche des festen Dachhimmels ausgebildet, beispielsweise bespannt sein kann, ist nicht nur der Sonnenschutz, d.h. der bespannte Verkleidungsrahmen, bei geschlossenem Verkleidungsdeckel unsichtbar, vielmehr ist die der Dachöffnung entsprechende Öffnung im festen Dachhimmel durch den Verkleidungsdeckel unauffällig verschließbar.

Die erfindungsgemäße Ausbildung des Verkleidungsdeckels bietet bei Verwendung eines Glasschiebedeckels den zusätzlichen Vorteil, daß bei geschlossenem Glasschiebedeckel nicht nur der Sonnenschutz in seine Schließstellung verschoben ist, sondern auch die Verkleidungsplatte in ihre Schließstellung verschoben sein kann. Dadurch ist der Fahrzeuginnenraum gegenüber einem Lichteinfall durch den Glasschiebedeckel hindurch vollständig abgedeckt. Selbstverständlich sind auch beliebige Zwischenstellungen mit begrenztem Lichteinfall möglich.

Für die Relativverschiebbarkeit von Verkleidungsrahmen und Verkleidungsplatte stehen diese beiden Elemente des Verkleidungsdeckels vorzugsweise auf die im Anspruch 2 angegebene Weise miteinander im Eingriff. Dabei ist es von Vorteil, wenn gemäß Anspruch 3 der Verkleidungsrahmen zusätzlich auch noch an den seitlichen Führungsschienen verschiebbar geführt ist, damit der bespannte Verkleidungsrahmen auch dann noch eine ausreichende Seitenführung erfährt, wenn die Verkleldungsplatte in Richtung ihrer Öffnungsstellung ganz oder teilweise verschoben ist.

Die Verkleidungsplatte und der bespannte Verkleidungsrahmen greifen zweckmäßig zu ihrer gegenseitigen Führung auf die im Anspruch 4 angegebene Weise miteinander ein.

Da sich der Verkleidungsrahmen und die Verkleidungsplatte übereinander in unterschiedlicher Höhenlage befinden, die Führung der Verkleidungsplatte und die zusätzliche Führung des Verkleidungsrahmens gemäß Anspruch 3 aber in denselben seitlichen Führungsschienen erfolgt und außerdem in der Schließstellung des Verkleidungsdeckels die Verkleidungsplatte mit dem bespannten Verkleidungsrahmen vorn bündig liegen soll, damit die Verkleidungsplatte den Verkleidungsrahmen vollständig abdecken kann, ist die Anordnung vorteilhaft gemäß Anspruch 5 getroffen. Hierbei sind am Verkleidungsrahmen den Höhenunterschied ausgleichende und die zusätzliche Führung besorgende Lagerböcke angebracht, die in der Schließstellung in entsprechenden nach vorn offenen Ausschnitten der Verkleidungsplatte Aufnahme finden. Sowohl die Führungen des Verkleidungsrahmens als auch diejenigen der Verkleidungsplatte wie auch deren Ausschnitte und die Lagerböcke sind vom Fahrzeuginnenraum nicht zu sehen, wenn der bei derartigen Schiebedachkonstruktionen übliche, auch die seitlichen Führungsschienen tragende Dachrahmen vorgesehen ist, der die Seitenränder des Verkleidungsdeckels überdeckt.

Zur Verschiebung des bespannten Verkleidungsrahmens von Hand ist daran entsprechend Anspruch 6 eine Handhabe befestigt, die eine entsprechende Aussparung in der Verkleidungsplatte durchgreift. Zweckmäßig ist hierbei der Aussparung benachbart eine Griffmulde in der Verkleidungsplatte angebracht, wie das im Anspruch 7 angegeben ist. Die Griffmulde dient der Verschiebung der Verkleidungsplatte von Hand. Damit auch bei geschlossenem Verkleidungsdeckel eine Entlüftung des Fahrzeuginnenraums bei ganz oder teilweise geöffnetem oder ausgestelltem Schiebedeckel möglich ist, kann die Griffmulde entsprechend Anspruch 8 in an sich bekannter Weise (DE-A-3 527 839) Bestandteil einer an der Verkleidungsplatte befestigten Entlüftungsleiste sein.

Anhand eines bevorzugten Ausführungsbeispiels unter Zuhilfenahme der Zeichnungen werden nachfolgend weitere Einzelheiten der Erfindung näher erläutert. Darin zeigt:
- Fig. 1: die abgebrochene Draufsicht auf ein Fahrzeugdach mit geöffnetem Schiebedach und in Lüftungs- und Sonnenschutzstellung befindlichem bespanntem Verkleidungsrahmen bei geöffneter Verkleidungsplatte,
- Fig. 2: die abgebrochene Draufsicht auf die in Vorwärtsfahrtrichtung gesehen linke Seite des Schiebedachs bei mit seinen beiden Teilen geschlossenem Verkleidungsdeckel und nicht eingezeichnetem Schiebedeckel,
- Fig. 3: den abgebrochenen Längsschnitt durch das Schiebedach entsprechend der mehrfach abgeknickten Schnittverlaufslinie III-III in Fig. 2, jedoch mit eingezeichnetem abgebrochenen Schiebedeckel,
- Fig. 4: den abgebrochenen Querschnitt durch das Schiebedach entsprechend der Linie IV-IV in Fig. 2,
- Fig. 5: den abgebrochenen Querschnitt durch das Schiebedach entsprechend der Linie V-V in Fig. 2,
- Fig. 6: die abgebrochene Draufsicht auf das Schiebedach ähnlich der Fig. 2, jedoch entsprechend der Darstellung in Fig. 1 bei geschlossenem bespanntem Verkleidungsrahmen und geöffneter Verkleidungsplatte,
- Fig. 7: den abgebrochenen Längsschnitt durch das Schiebedach entsprechend der mehrfach abgeknickten Schnittverlaufslinie VII-VII in Fig. 6,
- Fig. 8: die abgebrochene Draufsicht auf das Schiebedach im Bereich der Hinterkante der Dachöffnung bei mit seinen beiden Teilen vollständig geöffnetem Verkleidungsdeckel,
- Fig. 9: die abgebrochene Unteransicht des vorderen mittleren Bereichs des mit seinen beiden Teilen vollständig geschlossenen Verkleidungsdeckels,
- Fig. 10: den abgebrochenen Längsschnitt entsprechend der Linie X-X in Fig. 9 und
- Fig. 11: den abgebrochenen Längsschnitt entsprechend der Linie XI-XI in Fig. 10.

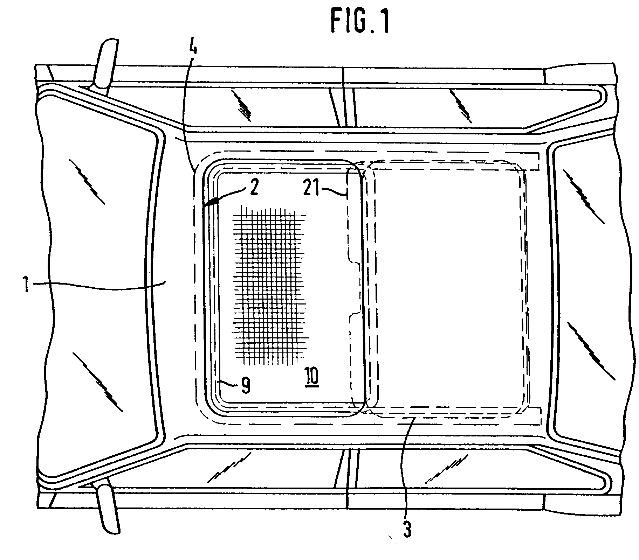

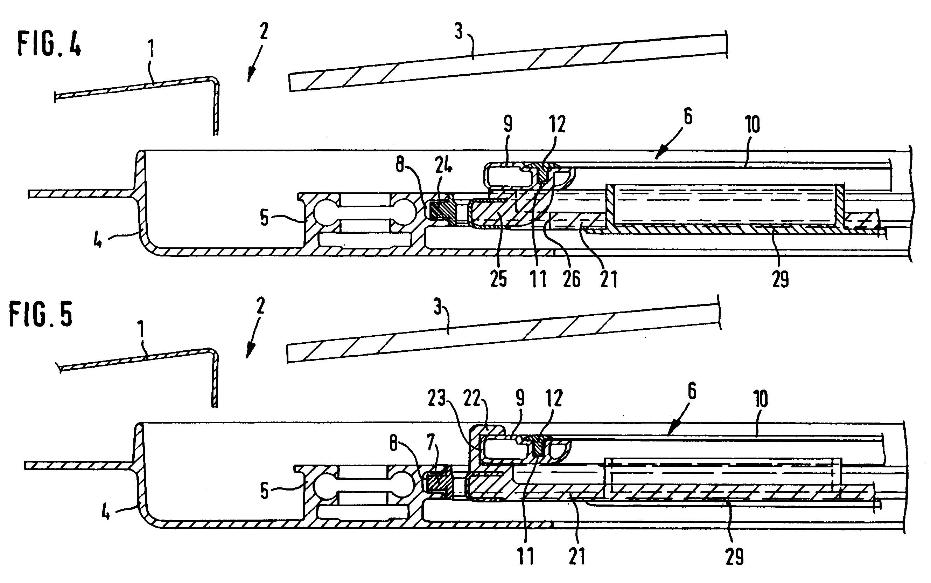

Wie aus Fig. 1 in Verbindung mit z.B. Fig. 4 ersichtlich ist, befindet sich in einem festen Fahrzeugdach 1 eine Dachöffnung 2, die bei geschlossenem Schiebedach von einem ihr verlagerbar zugeordneten Schiebedeckel 3 geschlossen ist. Im Ausführungsbeispiel handelt es sich um einen Glasschiebedeckel. Unterhalb des Fahrzeugdachs 1 befindet sich ein die Dachöffnung 2 umgebender Dachrahmen 4, der auf nicht gezeigte, aber bekannte Weise mit dem Fahrzeugdach 1 fest verbunden ist. Der Dachrahmen 4 ist mit seitlichen Führungsschienen 5 ausgerüstet, an welchen der Schiebedeckel 3 über nicht dargestellte Führungs- und Ausstellelemente auf hier nicht interessierende, im übrigen aber bekannte Weise geführt ist.

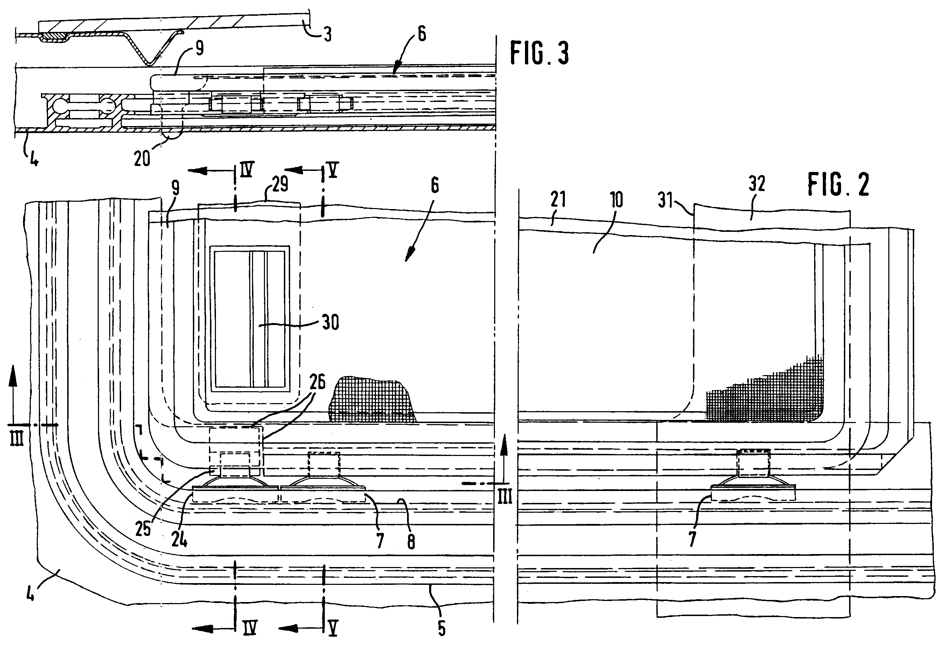

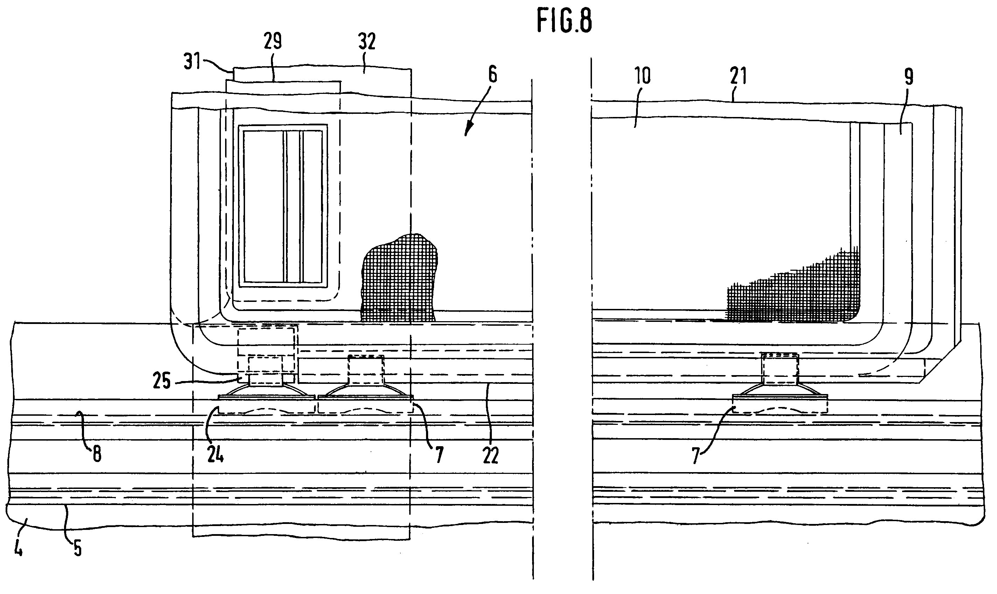

An den Führungsschienen 5 ist der insgesamt mit der Bezugszahl 6 bezeichnete Verkleidungsdeckel verschiebbar gelagert. Von dem Verkleidungsdeckel 6, seiner besonderen Ausbildung und seiner Führungssituation an den Führungsschienen ist in den Fig. 2 bis 8 nur die in Vorwärtsfahrtrichtung gesehen linke Seite dargestellt, die rechte Seite ist spiegelbildlich ausgeführt. In den Figuren 2, 6 und 8 ist zur Zeichnungsvereinfachung das Fahrzeugdach 1, d.h. das Dachblech, nicht eingezeichnet.

Der Verkleidungsdeckel 6 greift mit daran angebrachten Führungsschuhen 7 in einen seitlich an der Führungsschiene 5 befindlichen Führungskanal 8 verschiebbar ein, wie insbesondere aus Fig. 5 ersichtlich ist.

Im wesentlichen ist der Verkleidungsdeckel 6 zweiteilig ausgebildet und besteht aus einem bespannten Verkleidungsrahmen 9 und einer Verkleidungsplatte 21, die unterhalb des bespannten Verkleidungsrahmens 9 vorgesehen und auf weiter unten beschriebene Weise ausgebildet ist. Es wird auch noch beschrieben werden, daß der bespannte Verkleidungsrahmen 9 und die Verkleidungsplatte 21 relativ verschiebbar zueinander angeordnet sind.

Der steife Verkleidungsrahmen 9 ist mit einem flexiblen, luftdurchlässigen Flächenmaterial 10 bespannt. Wie beispielsweise aus den Fig. 4 und 5 hervorgeht, ist der Verkleidungsrahmen 9 an seiner oberen Fläche mit einer nach oben offenen Klemmnut 11 versehen, die durchgehend über alle Seiten des Verkleidungsrahmens 9 ausgebildet und auch über die Rahmenecken geführt ist. In die Klemmnut 11 ist eine das Flächenmaterial 10 erfassende und am Verkleidungsrahmen 9 fixierende kederartige Klemmleiste 12 eingepreßt. Die Klemmleiste 12 ist ebenfalls über alle Seiten des Verkleidungsrahmens 9 und auch über die Rahmenecken durchgeführt, bildet einen einteiligen Klemmrahmen und ist der Klemmnut 11 komplementär zugeordnet. Sie weist einen T-förmigen Profilquerschnitt auf, dessen Steg in die Klemmnut 11 unter Zwischenlage des Materials 10 einpreßbar ist und dessen Schenkel nach dem Einpressen der oberen Fläche des Verkleidungsrahmen 9 aufliegen. Bei der Montage wird das Flächenmaterial 10 etwa auf die Außengröße des Verkleidungsrahmens 9 zugeschnitten und auf die obere Fläche des Verkleidungsrahmens aufgelegt. Dabei überdecken die Ränder des Flächenmaterialzuschnitts die umlaufende Klemmnut 11, so daß diese Ränder beim nachfolgenden Einpressen des Stegs der rahmenartigen Klemmleiste 12 erfaßt und in die Klemmnut verdrängt werden. Hierbei wird das Flächenmaterial 10 biaxial in beiden Achsen gleichmäßig gespannt und überzieht den Verkleidungsrahmen 9 trommelfellartig straff. Denkbar ist auch, daß der den Sonnenschutz bildende bespannte Verkleidungsrahmen insgesamt einteilig als Spritzgußteil aus Kunststoff hergestellt sein kann. Im gezeichneten Beispiel ist der Verkleidungsrahmen 9 aus einem stranggepreßten Hohlkammerprofil hergestellt, während das flexible, luftdurchlässige Flächenmaterial 10 ein aus Synthetikfäden erzeugtes Textilgewebe sein kann.

Die im wesentlichen als geschlossenes Flächengebilde gestaltete Verkleidungsplatte 21, die an ihrer Unterseite dem (nicht gezeigten) festen Dachhimmel in Struktur, Aussehen und Farbgebung angepaßt sein kann, ist als eigensteife Platte ausgebildet, die dem Verkleidungsdeckel 6 auch unabhängig von dem mit Flächenmaterial 10 bespannten Verkleidungsrahmen 9 Formstabilität verleiht. Die Verkleidungsplatte 21 kann zu diesem Zweck aus glasfaserverstärktem Kunststoff spritzgeformt sein. Die seitlichen Führungsschuhe 7 sind paarweise gegenüberliegend an der Verkleidungsplatte 21 befestigt. An den beiden Seitenrändern der Verkleidungsplatte 21 sind langgestreckte Führungsleisten 22 angebracht, die zueinandergekehrte Führungsnuten 23 aufweisen, welche die Seitenstäbe des Verkleidungsrahmens 9 verschiebbar aufnehmen. Diese Situation ist am deutlichsten für die eine Seite der Schiebedachkonstruktion in Fig. 5 dargestellt. Der bespannte Verkleidungsrahmen 9 und die Verkleidungsplatte 21, die auf die beschriebene Weise an ihren Seitenrändern verschiebbar miteinander eingreifen, bilden insgesamt das als Verkleidungsdeckel bezeichnete Bauteil, das seiner Funktion entsprechend auch als Deckelschiebehimmel bezeichnet werden kann.

Die Führungsschuhe 7 sind federnd an der Verkleidungsplatte 21 angebracht, so daß der Verkleidungsdeckel 6 insgesamt klapperund verkantungsfrei an den Führungsschienen 5 geführt ist. Da bei geschlossenem Sonnenschutz, d.h. die Dachöffnung ausfüllendem bespanntem Verkleidungsrahmen 9, und geöffneter Verkleidungsplatte 21 (Fig. 1, 6 und 7) der Verkleidungsrahmen 9 nur noch in kurzen Abschnitten der Führungsleisten 22 geführt ist, sind am Verkleidungsrahmen 9 vorn zusätzlich Führungsschuhe 24 angebracht, die entsprechend den Führungsschuhen 7 federnd ausgebildet und ebenfalls in den Führungskanälen 8 der Führungsschienen 5 verschiebbar geführt sind. Anbringung und Ausbildung der vorderen Führungsschuhe 24 gehen beispielsweise aus den Fig. 2 und 4 hervor.

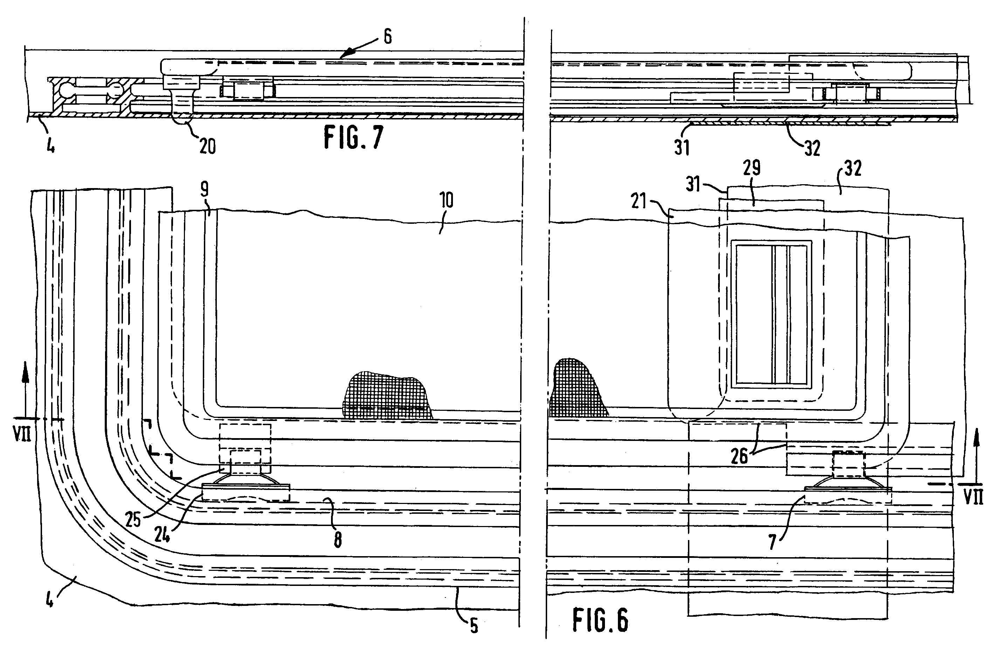

Da sich der Verkleidungsrahmen 9 und die Verkleidungsplatte 21 in unterschiedlichen in der Höhe gegeneinander versetzten Ebenen befinden, müssen besondere Maßnahmen getroffen werden, damit die vorderen Führungsschuhe 24 des Verkleidungsrahmens 9 in die Führungskanäle 8 eingreifen können. Wie am besten aus Fig. 4 hervorgeht, sind hierfür am Verkleidungsrahmen gegenüberliegend Lagerböcke 25 an der Unterseite des Verkleidungsrahmens 9 befestigt, die an ihrer Außenseite die Führungsschuhe 24 tragen. Die Lagerböcke 25 befinden sich in der Ebene der Verkleidungsplatte 21, daher sind für die Lagerböcke in der Verkleidungsplatte Ausschnitte 26 an beiden vorderen Seiten der Verkleidungsplatte 21 vorgesehen. Die Ausschnitte 26, von denen in den Draufsichtszeichnungen gemäß der Fig. 2 und 6 nur der linksseitige Ausschnitt dargestellt ist, sind nach vorn geöffnet. Aufgrund dieser Ausschnitte 26 können sowohl der Verkleidungsrahmen 9 als auch die Verkleidungsplatte 21 vorn bündig liegend in die Schließlage des Verkleidungsdeckels 6 verschoben werden (Fig. 2).

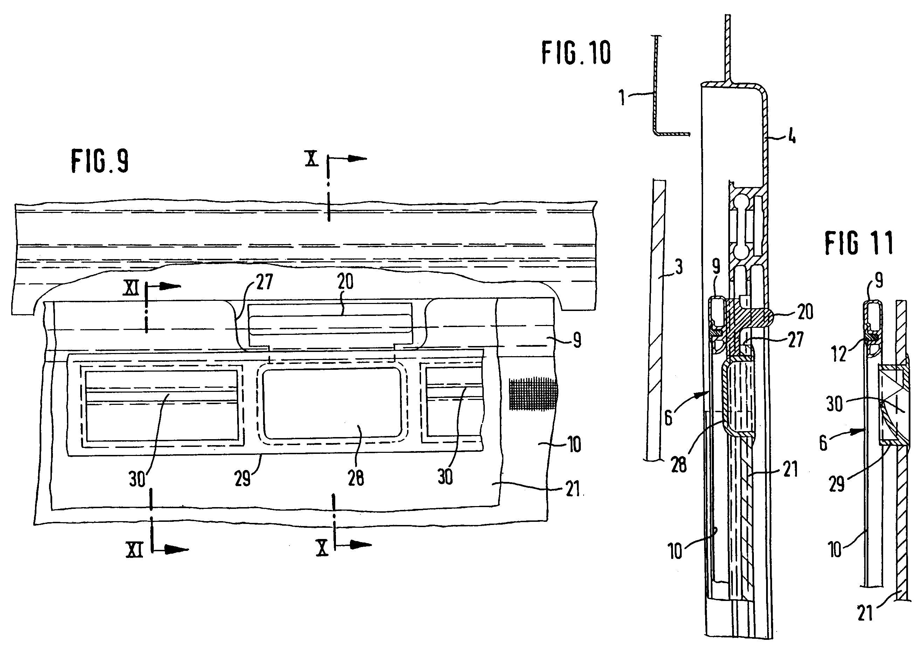

An dem vorderen Querstab des Verkleidungsrahmens 9 ist eine Handhabe 20 nach unten vorstehend befestigt, wie die Fig. 3, 7 und 10 verdeutlichen. Die Handhabe 20 steht auch über die Verkleidungsplatte 21 vor, wobei sie bei geschlossenem Verkleidungsdeckel 6 eine nach vorn geöffnete Aussparung 27 in der Verkleidungsplatte 21 durchgreift, wie die Fig. 9 und 10 verdeutlichen. Der Aussparung 27 benachbart ist eine Griffmulde 28 in der Verkleidungsplatte 21 angebracht. Im gezeichneten Beispiel ist die Griffmulde 28 Bestandteil einer Entlüftungsleiste 29, welche im Bereich der Vorderkante der Verkleidungsplatte 21 in diese eingelassen und an dieser befestigt ist. Die Entlüftungsleiste 29 besitzt zu beiden Seiten der Griffmulde 28 mehrere Luftdurchtrittsschlitze 30. Der nicht näher bezeichnete Befestigungssockel der Handhabe 20 ist so angebracht, daß die vordere Außenwand der Griffmulde 28 an ihm zur Anlage kommt, wenn die Verkleidungsplatte 21 relativ zum Verkleidungsrahmen 9 ganz nach vorn geschoben ist. Die Handhabe 20 kann bei der Schließverschiebung des Verkleidungsdeckels 6 wegbegrenzend für diesen auf den Rand des vorderen Querteils des Dachrahmens 4 auftreffen, wie das in Fig. 10 gezeigt ist. Die Fig. 9 und 10 verdeutlichen auch, daß bei geschlossener Verkleidungsplatte 21 der aus dem Verkleidungsrahmen 9 und dem Flächenmaterial 10 bestehende Sonnenschutz vom Fahrzeuginnenraum her nicht mehr sichtbar ist. Dadurch ist der optische Eindruck einer insgesamt einheitlichen Fahrzeughimmelfläche gegeben.

Zum Öffnen des Verkleidungsdeckels 6 kann dieser mittels der Handhabe 20 nach hinten unter das feste Fahrzeugdach 1 stufenlos verschoben werden. Hierbei wird die Verkleidungsplatte 21 zwangsläufig durch die Anlage des Sockels der Handhabe 20 an die vordere Außenfläche der Griffmulde 28 mitgenommen. Die Öffnungsverschiebung ist beendet, wenn die Handhabe 20 eine Stellung vor dem hinteren Rand der im festen Dachhimmel definierten Öffnung erreicht hat. Dieser hintere Rand stimmt in etwa überein mit der vorderen Kante 31 einer die beiden seitlichen Teile des Dachrahmens 4 gegeneinander aussteifenden Traverse 32 (Fig. 6 bis 8). In dieser Stellung kann die Verkleidungsplatte 21 durch eine nicht gezeigte Verrastungsvorrichtung an den Führungsschienen festgehalten werden. Bei Bedarf kann anschließend der Sonnenschutz an der Handhabe 20 bis zum in Fig. 10 dargestellten Anschlag der Handhabe 20 an das vordere Querteil des Dachrahmens 4 nach vorn gezogen werden. In dieser Stellung kann die Verkleidungsplatte 21 zur Verminderung des Lichteinfalls durch den Glasdeckel und durch den Sonnenschutz hindurch aus ihrer verrasteten Lage mittels der Griffmulde 28 in Relativbewegung zum geschlossenen Sonnenschutz nach vorn gezogen werden, bis die vordere Außenfläche der Griffmulde 28 an die Handhabe 20 des Sonnenschutzes anschlägt.

Wird der Schiebedeckel aus seiner Schließstellung (Fig. 2, 3 und 9, 10) zur Freilegung der Dachöffnung 2 nach hinten bewegt, kann er durch eine nicht dargestellte, aber bei bekannten Schiebehimmelanordnungen übliche Kupplung zwangsläufig den Verkleidungsdeckel 6 mit seinen beiden Teilen bis zu einer Stellung mitnehmen, in welcher sich die Griffmulde 28 der Verkleidungsplatte 21 hinter der vorderen Kante 31 der Traverse 32 und damit außerhalb des Sichtbereichs befindet. Die Handhabe 20 des Sonnenschutzes befindet sich jedoch noch vor der vorderen Kante 31 und ist daher von der Benutzerhand ergreifbar. Da der Verkleidungsdeckel 6 in dieser Stellung vom öffnungsverschobenen Schiebedeckel 3 festgehalten wird, kann anschließend der Sonnenschutz mittels der Handhabe 20 bis in seine Schließstellung nach vorn gezogen werden. Wird danach der Schiebedeckel 3 schließverschoben, nimmt er über die erwähnte Kupplung zwangsläufig die Verkleidungsplatte 21 nach vorn mit.

Wie vorstehend näher beschrieben wurde wird hiermit ein im wesentlichen zweiteiliger Verkleidungsdeckel, bestehend aus einem mit einem flexiblen, luftdurchlässigen Flächenmaterial bespannten Verkleidungsrahmen und einer steifen Verkleidungsplatte vorgeschlagen. Die im wesentlichen als geschlossenes Flächengebilde gestaltete Verkleidungsplatte ist unterhalb des bespannten Verkleidungsrahmens mit geringem Abstand dazu angeordnet und kann unterseitig eine auf den festen Dachhimmel in Werkstoff, Struktur und Farbe abgestimmte Ausbildung erfahren. Verkleidungsrahmen und Verkleidungsplatte sind relativ zueinander und aneinander verschiebbar geführt, so daß die Verkleidungsplatte zur Freigabe eines Lichteinfalls durch einen geschlossenen Glasdeckel hindurch unabhängig von dem aus dem bespannten Verkleidungsrahmen und dem Flächenmaterial gebildeten Sonnenschutz nach hinten öffnungsverschoben werden kann.

## Patentansprüche

1. Verkleidungsdeckel für Kraftfahrzeug-Schiebedächer, der unterhalb des einer Dachöffnung (2) verlagerbar zugeordneten Schiebedeckels (3) an seitlichen Führungsschienen (5) verschiebbar gelagert ist und einen steifen Verkleidungsrahmen (9) aufweist, der mit einem flexiblen, luftdurchlässigen Flächenmaterial (10) bespannt ist, **dadurch gekennzeichnet,** daß der Verklei dungsdeckel (6) aus dem bespannten Verkleidungsrahmen (9) und einer zusätzlichen Verkleidungsplatte (21) gebildet ist, wobei die Verkleidungsplatte (21) unterhalb des bespannten Verkleidungsrahmens (9) vorgesehen und im wesentlichen als geschlossenes Flächengebilde gestaltet ist, und daß der bespannte Verkleidungsrahmen (9) und die Verkleidungsplatte (21) relativ verschiebbar zueinander angeordnet sind.

2. Verkleidungsdeckel nach Anspruch 1, **dadurch gekennzeichnet**, daß der bespannte Verkleidungsrahmen (9) und die Verkleidungsplatte (21) an ihren Seitenrändern verschiebbar miteinander eingreifen.

3. Verkleidungsdeckel nach Anspruch 1 oder 2, **dadurch gekennzeichnet**, daß der Verkleidungsrahmen (9) vorn zusätzlich auch an den seitlichen Führungsschienen (5) verschiebbar geführt ist.

4. Verkleidungsdeckel nach einem der Ansprüche 1 bis 3, **dadurch gekennzeichnet**, daß an den beiden Seitenrändern der Verkleidungsplatte (21) Führungsleisten (22) angebracht sind, die zueinander gekehrte Führungsnuten (23) aufweisen, welche die Seitenstäbe des Verkleidungsrahmens (9) verschiebbar aufnehmen.

5. Verkleidungsdeckel nach Anspruch 3, **dadurch gekennzeichnet**, daß vorn am verkleidungsrahmen (9) gegenüberliegend Lagerböcke (25) angebracht sind, die jeweils in einen Ausschnitt (26) der Verkleidungsplatte (21) eingreifen und mit einem Führungsschuh (24) verschiebbar in der jeweils benachbarten Führungsschiene (5) gelagert sind, wobei die Ausschnitte (26) nach vorn geöffnet sind.

6. Verkleidungsdeckel nach einem der Ansprüche 1 bis 5, **dadurch gekennzeichnet**, daß an dem vorderen Querstab des Verkleidungsrahmens (9) eine Handhabe (20) nach unten vorstehend befestigt ist, die bei geschlossenem Verkleidungsdeckel (6) eine nach vorn geöffnete Aussparung (27) in der Verkleidungsplatte (21) durchgreift.

7. Verkleidungsdeckel nach Anspruch 6, **dadurch gekennzeichnet**, daß der Aussparung (27) benachbart eine Griffmulde (28) in der Verkleidungsplatte (21) angebracht ist.

8. Verkleidungsdeckel nach Anspruch 7, **dadurch gekennzeichnet**, daß die Griffmulde (28) in an sich bekannter Weise an einer Entlüftungsleiste (29) angebracht ist, welche im Bereich der Vorderkante der Verkleidungsplatte (21) an dieser befestigt ist.

## Claims

1. Lining panel for automobile sliding roofs, which is slidably mounted beneath the sliding lid (3), displaceably associated with a roof opening (2), on lateral guide rails (5) and comprises a stiff lining frame (9), which is covered with a flexible, air-permeable sheet material (10), characterized in that the lining panel (6) is formed of the covered lining frame (9) and of an additional lining plate (21), the lining plate (21) being provided beneath the covered lining frame (9) and being basically constructed as a closed areal structure, and that the covered lining frame (9) and the lining plate (21) are disposed displaceable relative to each other.

2. Lining panel according to Claim 1, characterized in that the covered lining frame (9) and the lining plate (21) engage each other slidably at their lateral edges.

3. Lining panel according to Claim 1 or 2, characterized in that the lining frame (9) is additionally displaceably guided also at the front on the lateral guide rails (5).

4. Lining panel according to one of Claims 1 to 3, characterized in that, on the two lateral edges of the lining plate (21), guide bars (22) are mounted, which comprise mutually facing guide grooves (23), which slidably receive the lateral bars of the lining frame (9).

5. Lining panel according to Claim 3, characterized in that bearing blocks (25) are mounted at the front on the lining frame (9) facing each other, which blocks each engage into a cut-out (26) of the lining plate (21) and are displaceable supported with a guide shoe (24) in the relative adjacent guide rail (5), the cut-outs (26) being forwardly open.

6. Lining panel according to one of Claims 1 to 5, characterized in that, on the front transverse member of the lining frame (9), a downwardly projecting handle (20) is fixed which, when the lining panel (6) is closed, passes through a forwardly open aperture (27) in the lining plate (21).

7. Lining panel according to Claim 6, characterized in that a gripping recess (28) is fitted in the lining plate (21) adjacent to the aperture (27).

8. Lining panel according to Claim 7, characterized in that the gripping recess (28) is fitted in known manner on a ventilation strip (29), which is fixed to the lining plate (21) in the region of its forward edge.

## Revendications

1. Panneau de revêtement pour des toits coulissants de véhicules automobiles, qui est monté de façon mobile sur des rails de guidage latéraux (5) au-dessous d'un panneau coulissant (3) associé de façon mobile à une ouverture de toit (2) et qui présente un cadre de revêtement rigide (9) qui est habillé d'un matériau plat flexible perméable à l'air (10), caractérisé en ce que le panneau de revêtement (6) est formé par le cadre de revêtement habillé (9) et par une plaque de revêtement supplémentaire (21), la plaque de revêtement (21) étant prévue au-dessous du cadre de revêtement habillé (9) et étant réalisée sensiblement sous forme d'une structure plane refermée, et en ce que le cadre de revêtement habillé (9) et la plaque de revêtement (21) sont agencés de façon mobile l'un par rapport à l'autre.

2. Panneau de revêtement selon la revendication 1, caractérisé en ce que le cadre de revêtement habillé (9) et la plaque de revêtement (21) s'engagent de façon mobile l'un dans l'autre sur leurs bords latéraux.

3. Panneau de revêtement selon l'une ou l'autre des revendications 1 et 2, caractérisé en ce que le cadre de revêtement (9) est guidé à l'avant de façon mobile en supplément également sur les rails de guidage latéraux (5).

4. Panneau de revêtement selon l'une quelconque des revendications 1 à 3, caractérisé en ce que des baguettes de guidage (22) sont montées sur les deux bords latéraux de la plaque de revêtement (21), ces baguettes présentant des gorges de guidage (23) qui sont orientées les unes vers les autres et qui reçoivent de façon mobile les tiges latérales du cadre de revêtement (9).

5. Panneau de revêtement selon la revendication 3, caractérisé en ce que des supports de montage (25) sont montés à l'avant en vis-à-vis sur le cadre de revêtement (9), qui s'engagent respectivement dans une découpe (26) de la plaque de revêtement (21) et qui sont montés de façon mobile avec un sabot de guidage (24) dans le rail de guidage (5) respectivement voisin, les découpes (26) étant ouvertes vers l'avant.

6. Panneau de revêtement selon l'une quelconque des revendications 1 à 5, caractérisé en ce qu'une manette (20) en saillie vers le bas est fixée sur la tige transversale avant du cadre de revêtement (9), qui traverse un évidement (27) ouvert vers l'avant dans la plaque de revêtement (21) lorsque le panneau de revêtement (6) est ferme.

7. Panneau de revêtement selon la revendication 6, caractérisé en ce qu'une poignée concave (28) est agencée dans la plaque de revêtement (21) au voisinage de l'évidement (27).

8. Panneau de revêtement selon la revendication 7, caractérisé en ce que la poignée concave (28) est montée de façon connue sur une baguette d'aération (29) qui est fixée dans la région de l'arête avant de la plaque de revêtement (21) sur celle-ci.
